# FASCICULE DE BREVET EUROPEEN

(11) **EP 1 137 324 B1**
(45) Date de publication et mention de la délivrance du brevet: **09.08.2006**
(21) Numéro de dépôt: 01400717.3
(22) Date de dépôt: 20.03.2001
(51) Int. Cl.: H05B 6/12

(54) **Dispositif de chauffage par induction de récipient culinaire**
Induktive Heizvorrichtung für Kochbehälter
Inductive heating device for cooking vessel

(30) Priorité: 21.03.2000 FR 0003601
(43) Date de publication de la demande: 26.09.2001
(73) Titulaire: Brandt Industries, 92500 Rueil Malmaison (FR)
(72) Inventeur: Cornec, René, 45380 La Chapelle St Mesmin (FR); Gouardo, Didier, 45770 Saran (FR); Roux, Alain, 45100 Orleans (FR)
(74) Mandataire: Santarelli

(56) Documents cités:
- EP-A- 0 498 735
- US-A- 5 808 280
- PATENT ABSTRACTS OF JAPAN vol. 015, no. 470 (E-1139), 28 novembre 1991 (1991-11-28) & JP 03 203187 A (TOSHIBA CORP;OTHERS: 01), 4 septembre 1991 (1991-09-04)

## Description

L'invention concerne le domaine des dispositifs et méthodes de chauffage par induction de récipient culinaire. Plusieurs de ces dispositifs de chauffage sont généralement regroupés dans une plaque de cuisson domestique. Chaque dispositif de chauffage est destiné au chauffage d'un seul récipient à la fois.

Les plaques de cuisson usuelles comportent généralement une bobine d'induction alimentée par l'intermédiaire d'un onduleur avec un courant à haute fréquence étant par exemple compris entre 20kHz et 50kHz. Cette bobine à induction est disposée en dessous d'un support susceptible d'être traversé par le champ magnétique produit par la bobine d'induction. Ainsi, des courant induits prennent naissance dans tout récipient culinaire en métal placé sur un tel support. Ces courants induits ont donc pour effet de chauffer ce récipient culinaire et lui seul, ce qui est un avantage par rapport aux plaques de cuisson chauffant par conduction thermique.

Cependant, pour obtenir une efficacité maximale, il convient que la taille ou le diamètre du récipient culinaire soit sensiblement la même que celle de la surface de chauffage ou de cuisson correspondant à la bobine d'induction. En effet, lorsque la taille du récipient culinaire est nettement supérieure à celle de la surface de chauffage, le chauffage par induction est imparfait car toute zone annulaire située à l'extérieur de la surface de chauffage se trouve hors du champ magnétique produit par la bobine d'induction. Lorsque le récipient culinaire présente une taille nettement inférieure à celle de la surface de chauffage, la zone annulaire externe de la surface de chauffage est alimentée inutilement en courant électrique par la bobine à induction car cette zone annulaire externe ne participe pas à la production de courant induit ayant pour effet de chauffer le récipient culinaire. Là encore, le chauffage du récipient culinaire par induction est donc imparfait. Par ailleurs, le fait que dans ce cas, cette zone annulaire externe soit parcourue par un courant électrique sans qu'aucune charge, c'est-à-dire aucun récipient culinaire, ne soit disposée en regard, a pour inconvénient que cette zone annulaire externe génère des perturbations radioélectriques.

L'ensemble constitué par la surface de chauffage pouvant être alimentée par une bobine et par la bobine correspondante sera appelé dans la suite inducteur. Un problème soulevé par les dispositifs de chauffage par induction est l'adaptation de la taille de l'inducteur alimenté à la taille de la charge, c'est-à-dire du récipient culinaire.

Selon un art antérieur, il est connu une alimentation périodique en temps partagé de tous les inducteurs couverts par la charge. Tous les inducteurs couverts par la charge sont successivement alimentés au cours de chaque période pendant l'étape de chauffage. Un inconvénient de cet art antérieur est le bruit effectué lors de la commutation périodique des interrupteurs permettant l'envoi du courant électrique dans l'un ou l'autre inducteur. Un autre inconvénient de cet art antérieur est l'inhomogénéité de la cuisson de la charge.

Selon un autre art antérieur, tel que US-A-5 808 280, il est connu une alimentation simultanée de tous les inducteurs couverts par la charge. Chaque inducteur est alimenté par un générateur distinct. Un inconvénient de cet art antérieur est le coût du dispositif de chauffage. Un autre inconvénient de cet art antérieur est l'inhomogénéité de la cuisson de la charge.

Un des problèmes de l'art antérieur est l'inhomogénéité de cuisson de la charge. L'invention propose un dispositif de chauffage par induction dont le mode d'alimentation particulier des inducteurs pendant l'étape de chauffage permet de résoudre dans une large mesure ce problème. D'autres problèmes de l'art antérieur, comme le bruit et le coût par exemple, sont résolus au travers d'options ou de réalisations préférentielles du dispositif de chauffage selon l'invention.

Selon l'invention, il est prévu une méthode de chauffage par induction de récipient culinaire, au moyen d'un dispositif comportant au moins trois inducteurs concentriques et comprenant une étape de chauffage de charge, caractérisé en ce que, pour une charge couvrant au moins trois inducteurs, au moins un inducteur couvert intermédiaire, déterminé de manière à homogénéiser l'apport de chaleur à la charge, n'est pas alimenté pendant l'étape de chauffage. L'invention se rapporte également à un dispositif adapté à mettre en oeuvre la methode selon l'invention.

L'invention sera mieux comprise et d'autres particularités et avantages apparaîtront à l'aide de la description ci-après et des dessins joints, donnés à titre d'exemples, où :
- la figure 1 représente schématiquement un exemple de mode de réalisation préférentiel de la structure d'un dispositif de chauffage selon l'invention ;
- les figures 2, 3 et 4 représentent schématiquement différents exemples de modes de réalisation préférentiels de la configuration électrique des inducteurs d'un dispositif de chauffage selon l'invention.

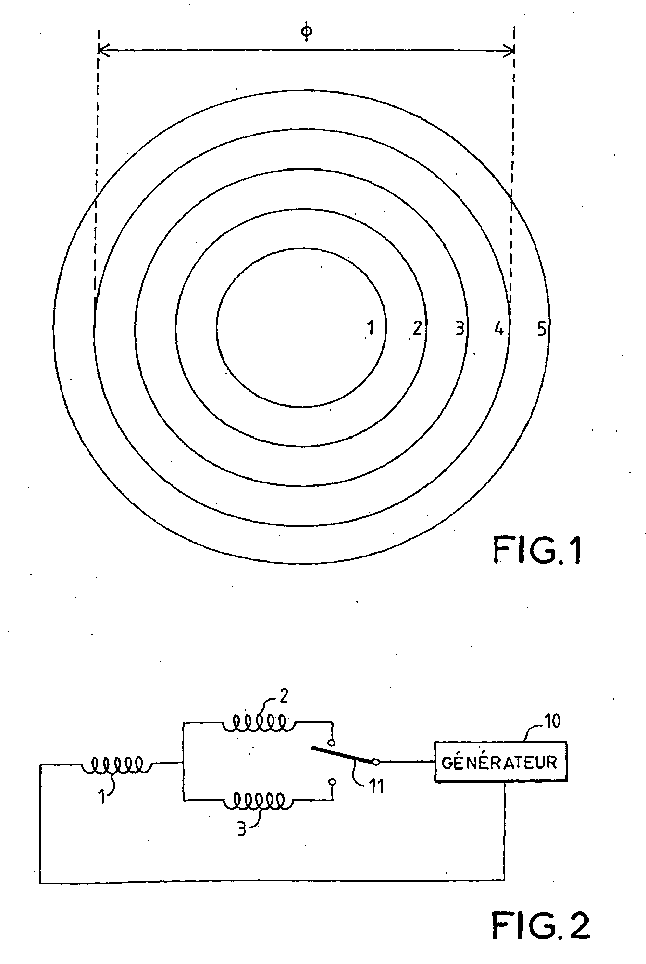

La figure 1 représente schématiquement un mode de réalisation préférentiel de la structure d'un dispositif de chauffage selon l'invention. Le dispositif de chauffage comporte plusieurs inducteurs concentriques, au moins trois. L'exemple représenté sur la figure 1 comporte cinq inducteurs concentriques numérotés 1 à 5 à partir de l'inducteur central 1 en allant vers l'inducteur périphérique le plus externe 5. Les inducteurs 2 à 5 sont des inducteurs périphériques. Les deux inducteurs périphériques les plus internes sont les inducteurs 2 et 3. Les inducteurs concentriques sont de préférence circulaires. Le diamètre Φ représenté sur la figure 1 est aussi bien le diamètre externe du quatrième inducteur concentrique 4 que le diamètre interne du cinquième inducteur concentrique 5. Les inducteurs concentriques peuvent aussi être par exemple elliptiques.

Le procédé de chauffage d'un récipient culinaire comporte au moins une étape de chauffage du récipient culinaire. Le récipient culinaire, c'est-à-dire la charge, couvre un certain nombre d'inducteurs dépendant de la taille de la charge. Pour une charge relativement grande couvrant au moins trois inducteurs, c'est-à-dire au moins l'inducteur central 1 et les deux inducteurs périphériques les plus internes 2 et 3, au contraire de l'art antérieur, un ou plusieurs inducteurs couverts par la charge ne sont pas alimentés. Un inducteur intermédiaire est un inducteur qui n'est ni l'inducteur central ni l'inducteur périphérique le plus externe, c'est-à-dire que sur la figure 1, les inducteurs intermédiaires sont les inducteurs 2, 3 et 4.

Supposons une charge couvrant les inducteurs 1 à 4. L'inducteur couvert central reste l'inducteur 1 tandis que l'inducteur périphérique couvert le plus externe devient l'inducteur 4 ; les inducteurs couverts intermédiaires sont dans ce cas les inducteurs 2 et 3.

Au moins un inducteur couvert intermédiaire n'est pas alimenté pendant l'étape de chauffage. Le ou les inducteurs couverts intermédiaires non alimentés pendant l'étape de chauffage sont déterminés de manière à homogénéiser l'apport de chaleur à la charge, c'est-à-dire que le fait de ne pas l'alimenter ou de ne pas les alimenter pendant l'étape de chauffage de la charge rendra l'apport de chaleur à la charge plus homogène, ce qui rendra plus homogène la cuisson ou le chauffage de la charge. Les inducteurs non couverts par la charge ne sont de préférence pas alimentés.

Par exemple, pour une charge couvrant les trois inducteurs 1, 2, et 3, de préférence l'inducteur couvert intermédiaire 2 ne sera pas alimenté pendant l'étape de chauffage.

Par exemple, pour une charge couvrant les quatre inducteurs 1, 2, 3 et 4, de préférence l'inducteur couvert intermédiaire 2 ne sera pas alimenté pendant l'étape de chauffage.

Par exemple, pour une charge couvrant les cinq inducteurs 1, 2, 3, 4 et 5, de préférence les inducteurs couverts intermédiaires 2 et 4 ne seront pas alimentés pendant l'étape de chauffage.

De préférence, tous les inducteurs concentriques du dispositif de chauffage selon l'invention sont électriquement reliés à un même générateur non représenté sur la figure 1. Chaque dispositif de chauffage selon l'invention ne nécessitant qu'un seul générateur, il est moins coûteux. Le générateur a par exemple une puissance d'environ 2800W.

Le ou les inducteurs couverts intermédiaires non alimentés pendant l'étape de chauffage sont avantageusement déterminés de manière à ce que les pics que comporte la répartition du champ magnétique soient les plus faibles possibles de manière à mieux homogénéiser la répartition de température au niveau du fond du récipient culinaire, même lorsque la conduction thermique du récipient en métal n'est pas très bonne.

Parmi les inducteurs couverts par la charge, pendant l'étape de chauffage d'une charge couvrant à la fois l'inducteur central et au moins deux inducteurs périphériques, de préférence, d'une part il y a strictement plus d'inducteurs alimentés que d'inducteurs non alimentés, et d'autre part il n'y a ni trois inducteurs consécutifs alimentés ni deux inducteurs consécutifs non alimentés, ce qui permet une meilleure atténuation des pics de champ magnétique au niveau de la charge et une meilleure homogénéisation de la cuisson ou du chauffage de la charge. Par exemple, pour une charge couvrant quatre inducteurs concentriques 1 à 4, pour obtenir à la fois une bonne homogénéisation de la cuisson et une puissance de chauffage suffisante, les inducteurs alimentés peuvent être par exemple 1, 3 et 4. N'alimenter par exemple que 1 et 3 ou que 1 et 4 donnera des résultats de cuisson moins bons.

En cas de charge couvrant à la fois l'inducteur central et au moins deux inducteurs périphériques, parmi les inducteurs qui sont couverts par la charge et qui sont alimentés, se trouvent avantageusement au moins l'inducteur central 1 et l'inducteur périphérique le plus externe, ce qui contribue à homogénéiser la cuisson de la charge.

Dans une option de réalisation de l'invention, un espace annulaire substantiel est situé entre au moins deux inducteurs consécutifs. Par exemple, pour un dispositif de chauffage tel que représenté à la figure 1, les couronnes 1, 2, 3 et 5 sont des inducteurs tandis que la couronne 4 est un espace annulaire substantiel situé entre le deuxième inducteur périphérique 3 et le troisième inducteur périphérique 5.

Les inducteurs peuvent être électriquement reliés entre eux de diverses manières. Préférentiellement, les configurations électriques selon l'invention sont réalisées de manière à ne nécessiter que des interrupteurs de configuration, c'est-à-dire des interrupteurs dont la position ne bouge pas au cours de l'étape de chauffage d'un récipient culinaire donné.

L'inducteur central est de préférence branché en série avec l'ensemble constitué par les deux inducteurs périphériques les plus internes qui sont avantageusement branchés de sorte à former un T avec l'inducteur central. Au moins un interrupteur est préférentiellement disposé de manière à ce que les deux inducteurs périphériques les plus internes ne puissent pas être simultanément alimentés. La figure 2 donne un exemple de configuration électrique dans le cas d'un dispositif de chauffage qui ne comporte que trois inducteurs. Les deux inducteurs périphériques 2 et 3 sont branchés de sorte à former un T avec l'inducteur central 1. Un générateur 10 est relié à un interrupteur 11 ayant deux positions. Dans l'une des positions de l'interrupteur 11, le générateur 10 alimente les inducteurs 2 et 1, tandis que dans l'autre position, il alimente les inducteurs 3 et 1.

Lorsque le dispositif de chauffage par induction selon l'invention comporte au moins un quatrième inducteur concentrique qui est le troisième inducteur périphérique à partir de l'inducteur central, le quatrième inducteur concentrique, de préférence, est branché en série avec le deuxième inducteur périphérique et peut être court-circuité, généralement par un ensemble d'interrupteurs.

Lorsque le dispositif de chauffage par induction selon l'invention comporte au moins un cinquième inducteur concentrique qui est le quatrième inducteur périphérique à partir de l'inducteur central, le cinquième inducteur concentrique, de préférence, est branché en dérivation du troisième inducteur périphérique et peut être court-circuité, généralement par un ensemble d'interrupteurs.

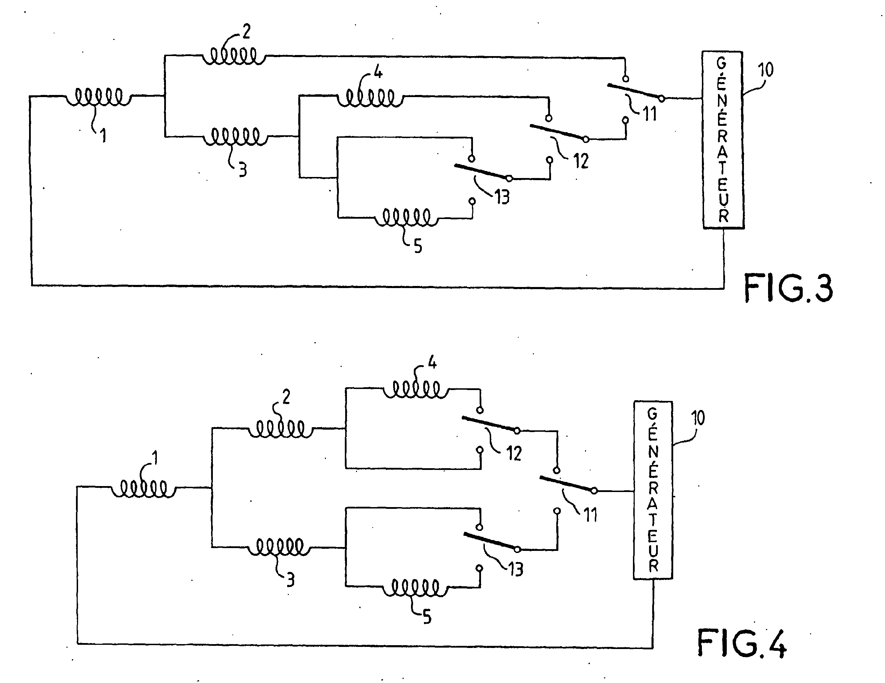

La figure 3 donne un exemple de configuration électrique dans le cas d'un dispositif de chauffage constitué par cinq inducteurs concentriques. Les deux inducteurs périphériques 2 et 3 sont branchés de sorte à former un T avec l'inducteur central 1. Un troisième inducteur périphérique 4 et un quatrième inducteur périphérique 5 sont branchés en dérivation, et en série avec le deuxième inducteur périphérique 3. Par un actionnement des interrupteurs 12 et 13, les inducteurs périphériques 4 et/ou 5 peuvent être court-circuités. Un générateur 10 est relié à un interrupteur 11. L'interrupteur 11 permet de ne pas alimenter simultanément les inducteurs 2 et 3. Avec le dispositif de chauffage représenté à la figure 3, quatre combinaisons d'inducteurs simultanément alimentés peuvent être choisies selon la taille de la charge, ce sont : l'inducteur central 1 et le premier inducteur périphérique 2 ; l'inducteur central 1 et le deuxième inducteur périphérique 3 ; l'inducteur central 1, le deuxième inducteur périphérique 3 et le troisième inducteur périphérique 4 ; l'inducteur central 1, le deuxième inducteur périphérique 3 et le quatrième inducteur périphérique 5. Une fois choisie la combinaison d'inducteurs correspondant à une charge donnée, ladite combinaison est alors conservée pendant toute l'étape de chauffage de ladite charge.

La figure 4 donne un autre exemple de configuration électrique dans le cas d'un dispositif de chauffage constitué par cinq inducteurs concentriques. Les deux inducteurs périphériques 2 et 3 sont branchés de sorte à former un T avec l'inducteur central 1. Un troisième inducteur périphérique 4 est branché en série du premier inducteur périphérique 2. Un quatrième inducteur périphérique 5 est branché en série du deuxième inducteur périphérique 3. Les inducteurs périphériques 4 et 5 peuvent être court-circuités respectivement à l'aide des interrupteurs 12 et 13. Un générateur 10 est relié à un interrupteur 11. L'interrupteur 11 permet de ne pas alimenter simultanément les inducteurs 2 et 3. Avec le dispositif de chauffage représenté à la figure 3, quatre combinaisons d'inducteurs simultanément alimentés peuvent être choisies selon la taille de la charge, ce sont : l'inducteur central 1 et le premier inducteur périphérique 2 ; l'inducteur central 1 et le deuxième inducteur périphérique 3 ; l'inducteur central 1, le premier inducteur périphérique 2 et le troisième inducteur périphérique 4 ; l'inducteur central 1, le deuxième inducteur périphérique 3 et le quatrième inducteur périphérique 5.

En plus de l'étape de chauffage de charge, le dispositif de chauffage par induction selon l'invention comporte préférentiellement une étape de détection de charge. L'étape de détection de charge est réalisée par des moyens de commande lesquels réalisent également avantageusement l'étape de chauffage de charge. L'étape de détection de charge consiste à déterminer si une charge est située en regard d'un ou de plusieurs inducteurs, et en regard de quels inducteurs ladite charge est située.

De préférence, l'étape de détection de charge en regard des inducteurs comporte l'alimentation successive de plusieurs jeux d'inducteurs, la mesure des énergies correspondantes dépensées par ladite alimentation, le calcul d'au moins une différence entre les énergies mesurées, la détermination du nombre d'inducteurs couverts par la charge détectée étant réalisée à partir de la ou des différences calculées. Au lieu de calculer des différences entre les énergies mesurées, les énergies mesurées peuvent être directement comparées entre elles.

Dans le cas d'un exemple de dispositif de chauffage constitué par trois inducteurs concentriques 1, 2 et 3 comme celui représenté à la figure 2, l'étape de détection de charge comporte avantageusement les phases suivantes. Tout d'abord, les inducteurs 1 et 2 sont alimentés pendant un temps donné t pendant lequel l'énergie E(1+2) dépensée par l'alimentation est mesurée. Puis, les inducteurs 1 et 3 sont alimentés pendant le même temps donné t pendant lequel l'énergie E(1+3) dépensée par l'alimentation est mesurée. Ensuite, la différence Δ entre les énergies mesurées E(1+2) et E(1+3) est calculée. Si cette différence Δ est supérieure à zéro, c'est-à-dire si E(1+2)>E(1+3), alors les inducteurs 1et 2 sont alimentés. Si cette différence Δ est inférieure à zéro, c'est-à-dire si E(1+2)<E(1+3), alors les inducteurs 1et 3 sont alimentés.

Une fois qu'une combinaison d'inducteurs à alimenter, correspondant à un type de charge donnée, est déterminée, cette combinaison est avantageusement conservée pendant toute l'étape de chauffage de ladite charge. Ainsi, le problème du bruit dû à la commutation des interrupteurs pendant l'étape de chauffage est supprimé.

Le nombre des inducteurs concentriques est préférentiellement impair. Le nombre des inducteurs concentriques est avantageusement égal à trois ; un dispositif de chauffage comportant trois inducteurs concentriques est communément appelé « inducteur triple couronne ».

Le dispositif de chauffage par induction selon l'invention permet d'obtenir des bons résultats de cuisson même avec de mauvais récipients culinaires, c'est-à-dire avec des récipients culinaires dont la conduction thermique moins bonne ne leur permet pas de répartir très vite d'éventuels points chauds localisés.

Une répartition plus homogène de l'apport de chaleur à la charge est particulièrement intéressante dans le cas où la charge, c'est-à-dire le récipient culinaire, est de grande taille. Le dispositif de chauffage par induction selon l'invention est particulièrement intéressant pour le chauffage des grandes poêles utilisés par exemple pour les fritures de viande ou de poisson. De préférence, le diamètre externe de l'inducteur périphérique le plus externe est sensiblement égal à celui d'une grande poêle à frire.

## Revendications

1. Méthode de chauffage par induction de récipient culinaire, au moyen d'un dispositif comportant au moins trois inducteurs concentriques (1, 2, 3, 4, 5) et comprenant une étape de chauffage de charge, **caractérisée en ce que**, pour une charge couvrant au moins trois inducteurs, au moins un inducteur couvert intermédiaire, déterminé de manière à homogénéiser l'apport de chaleur à la charge, n'est pas alimenté pendant l'étape de chauffage.

2. Méthode de chauffage selon la revendication précédente, **caractérisée en ce que**, en cas de charge couvrant à la fois l'inducteur central (1) et au moins deux inducteurs périphériques (2, 3, 4, 5), pendant l'étape de chauffage, parmi les inducteurs couverts, il y a strictement plus d'inducteurs alimentés que d'inducteurs non alimentés et il n'y a ni trois inducteurs consécutifs alimentés ni deux inducteurs consécutifs non alimentés.

3. Méthode de chauffage selon l'une quelconque des revendications précédentes, **caractérisée en ce que**, en cas de charge couvrant à la fois l'inducteur central (1) et au moins deux inducteurs périphériques (2, 3, 4, 5), parmi les inducteurs qui sont couverts par la charge et qui sont alimentés, se trouvent au moins l'inducteur central (1) et l'inducteur périphérique le plus externe.

4. Méthode de chauffage selon l'une quelconque des revendications précédentes, **caractérisée en ce qu'**elle comporte une étape de détection de charge en regard des inducteurs.

5. Méthode de chauffage selon la revendication 4, **caractérisée en ce que** l'étape de détection de charge en regard des inducteurs comporte l'alimentation successive de plusieurs jeux d'inducteurs, la mesure des énergies correspondantes (E(1+2), E(1+3)) dépensées par ladite alimentation, le calcul d'au moins une différence (Δ) entre les énergies mesurées (E(1+2), E(1+3)), la détermination du nombre d'inducteurs couverts par la charge détectée étant réalisée à partir de la ou des différences calculées (Δ).

6. Dispositif de chauffage par induction de récipient culinaire, comportant au moins trois inducteurs concentriques (1, 2, 3, 4, 5), ledit dispositif étant adapté à mettre en oeuvre la méthode de chauffage selon l'une quelconque des revendications 1 à 5.

7. Dispositif de chauffage selon la revendication 6, **caractérisé en ce que** tous les inducteurs concentriques (1 à 5) sont reliés à un même générateur (10).

8. Dispositif de chauffage selon l'une quelconque des revendications 6 ou 7, **caractérisé en ce que** l'inducteur central (1) est branché en série avec l'ensemble constitué par les deux inducteurs périphériques les plus internes (2 et 3) qui sont branchés de sorte à former un T avec l'inducteur central (1), et **en ce qu'**au moins un interrupteur (11, 12, 13) est disposé de manière à ce que les deux inducteurs périphériques les plus internes (2 et 3) ne puissent pas être simultanément alimentés.

9. Dispositif de chauffage selon la revendication 8, **caractérisé en ce que** le dispositif comporte au moins un quatrième inducteur concentrique (4) qui est le troisième inducteur périphérique à partir de l'inducteur central (1), qui est branché en série avec le deuxième inducteur périphérique (3), et qui peut être court-circuité.

10. Dispositif de chauffage selon la revendication 9, **caractérisé en ce qu'**un espace annulaire substantiel (4) est situé entre le deuxième inducteur périphérique (3) et le troisième inducteur périphérique (5).

11. Dispositif de chauffage selon la revendication 9, **caractérisé en ce que** le dispositif comporte au moins un cinquième inducteur concentrique (5) qui est le quatrième inducteur périphérique à partir de l'inducteur central (1), qui est branché en dérivation du troisième inducteur périphérique (4), et qui peut être court-circuité.

12. Dispositif de chauffage selon l'une quelconque des revendications 6 à 11, **caractérisé en ce que** le nombre des inducteurs concentriques est impair.

13. Dispositif de chauffage selon la revendication 12, **caractérisé en ce que** le nombre des inducteurs concentriques est égal à trois.

14. Dispositif de chauffage selon l'une quelconque des revendications 6 à 13, **caractérisé en ce que** le diamètre externe de l'inducteur périphérique le plus externe (3, 4, 5) est sensiblement égal à celui d'une grande poêle à frire.

## Claims

1. Inductive heating method for heating a cooking vessel by means of a device comprising at least three concentric inductors (1, 2, 3, 4, 5) and comprising a step of heating a load, **characterized in that**, for a load covering at least three inductors, at least one intermediate inductor which is covered and which is determined in such a manner as to homogenize the input of heat to the load is not energized during the heating step.

2. Heating method according to the preceding claim, **characterized in that**, if a load covers the central inductor (1) and at least two peripheral inductors (2, 3, 4, 5), during the heating step, among the inductors which are covered there are strictly more inductors that are energized than inductors that are not energized and there are neither three consecutive inductors that are energized nor two consecutive inductors that are not energized.

3. Heating method according to any one of the preceding claims, **characterized in that**, if a load covers the central inductor (1) and at least two peripheral inductors (2, 3, 4, 5), the inductors which are covered by the load and which are energized include at least the central inductor (1) and the outermost peripheral inductor.

4. Heating method according to any one of the preceding claims, **characterized in that** it comprises a step of detecting a load in front of the inductors.

5. Heating method according to Claim 4, **characterized in that** the step of detecting a load in front of the inductors comprises successively energizing a plurality of sets of inductors, measuring the corresponding energies (E(1+2), E(1+3)) expended by said energization, and calculating at least one difference (Δ) between the measured energies (E(1+2), E(1+3)), the number of inductors covered by the detected load being determined from the calculated difference or differences (Δ).

6. Inductive heating device for heating a cooking vessel, comprising at least three concentric inductors (1, 2, 3, 4, 5), said device being designed to carry out the heating method according to any one of Claims 1 to 5.

7. Heating device according to Claim 6, **characterized in that** all the concentric inductors (1 to 5) are connected to a common generator (10).

8. Heating device according to any one of Claims 6 or 7, **characterized in that** the central inductor (1) is connected in series with the combination of the two innermost peripheral inductors (2 and 3) which are connected to form a T with the central inductor (1), and **in that** at least one switch (11, 12, 13) is provided so that the two innermost peripheral inductors (2 and 3) cannot be energized simultaneously.

9. Heating device according to Claim 8, **characterized in that** the device comprises at least a fourth concentric inductor (4) which is the third peripheral inductor from the central inductor (1), which is connected in series with the second peripheral inductor (3) and can be short-circuited.

10. Heating device according to Claim 9, **characterized in that** a substantial annular gap (4) is located between the second peripheral inductor (3) and the third peripheral inductor (5).

11. Heating device according to Claim 9, **characterized in that** the device comprises at least a fifth concentric inductor (5) which is the fourth peripheral inductor from the central inductor (1), which is connected in parallel with the third peripheral inductor (4) and which can be short-circuited.

12. Heating device according to any one of Claims 6 to 11, **characterized in that** there is an odd number of concentric inductors.

13. Heating device according to Claim 12, **characterized in that** there are three concentric inductors.

14. Heating device according to any one of Claims 6 to 13, **characterized in that** the external diameter of the outermost peripheral inductor (3, 4, 5) is substantially equal to that of a large frying pan.

## Patentansprüche

1. Verfahren zur Erwärmung eines Kochgefäßes durch Induktion mit Hilfe einer Vorrichtung, die mindestens drei konzentrische Induktoren (1, 2, 3, 4, 5) aufweist, wobei das Verfahren einen Schritt zur Lasterwärmung umfasst, **dadurch gekennzeichnet, dass** für eine mindestens drei Induktoren bedeckende Last mindestens ein bedeckter Zwischeninduktor, der so bestimmt ist, dass die Zufuhr von Wärme zur Last homogenisiert ist, während des Erwärmungsschrittes nicht gespeist wird.

2. Erwärmungsverfahren nach dem vorhergehenden Anspruch, **dadurch gekennzeichnet, dass** bei einer Last, die sowohl den mittleren Induktor (1) als auch mindestens zwei Umfangsinduktoren (2, 3, 4, 5) bedeckt, während des Erwärmungsschrittes unter den bedeckten Induktoren mehr gespeiste Induktoren als ungespeiste Induktoren vorhanden sind und weder drei aufeinanderfolgende gespeiste Induktoren noch zwei aufeinanderfolgende ungespeiste Induktoren vorhanden sind.

3. Erwärmungsverfahren nach einem der vorhergehenden Ansprüche, **dadurch gekennzeichnet, dass** bei einer Last, die sowohl den mittleren Induktor (1) als auch mindestens zwei Umfangsinduktoren (2, 3, 4, 5) bedeckt, mindestens der mittlere Induktor (1) und der äußerste Umfangsinduktor zu den Induktoren gehören, die durch die Last bedeckt sind und gespeist werden.

4. Erwärmungsverfahren nach einem der vorhergehenden Ansprüche, **dadurch gekennzeichnet, dass** es einen Schritt zur Erfassung der den Induktoren gegenüberliegenden Last umfasst.

5. Erwärmungsverfahren nach Anspruch 4, **dadurch gekennzeichnet, dass** der Schritt zur Erfassung der den Induktoren gegenüberliegenden Last die sukzessive Speisung mehrerer Induktorsätze, die Messung der entsprechenden, durch die Speisung verbrauchten Energien (E(1+2), E(1+3)) und die Berechnung mindestens einer Differenz (Δ) zwischen den gemessenen Energien (E(1+2), E(1+3)) umfasst, wobei die Bestimmung der Anzahl der von der erfassten Last bedeckten Induktoren ausgehend von der berechneten Differenz (Δ) oder von den berechneten Differenzen (Δ) durchgeführt wird.

6. Vorrichtung zur Erwärmung eines Kochgefäßes durch Induktion, mit mindestens drei konzentrischen Induktoren (1, 2, 3, 4, 5), wobei die Vorrichtung dazu geeignet ist, das Erwärmungsverfahren nach einem der Ansprüche 1 bis 5 anzuwenden.

7. Erwärmungsvorrichtung nach Anspruch 6, **dadurch gekennzeichnet, dass** alle konzentrischen Induktoren (1 bis 5) mit ein und demselben Generator (10) verbunden sind.

8. Erwärmungsvorrichtung nach Anspruch 6 oder 7, **dadurch gekennzeichnet, dass** der mittlere Induktor (1) mit der Baugruppe in Reihe geschaltet ist, die aus den beiden innersten Umfangsinduktoren (2 und 3) besteht, welche so geschaltet sind, dass sie mit dem mittleren Induktor (1) ein T bilden, und dass mindestens ein Schalter (11, 12, 13) so angeordnet ist, dass die beiden innersten Umfangsinduktoren (2 und 3) nicht gleichzeitig gespeist werden können.

9. Erwärmungsvorrichtung nach Anspruch 8, **dadurch gekennzeichnet, dass** die Vorrichtung mindestens einen vierten konzentrischen Induktor (4) aufweist, der ausgehend von dem mittleren Induktor (1) der dritte Umfangsinduktor ist, mit dem zweiten Umfangsinduktor (3) in Reihe geschaltet ist und kurzgeschlossen werden kann.

10. Erwärmungsvorrichtung nach Anspruch 9, **dadurch gekennzeichnet, dass** sich zwischen dem zweiten Umfangsinduktor (3) und dem dritten Umfangsinduktor (5) ein wesentlicher ringförmiger Raum (4) befindet.

11. Erwärmungsvorrichtung nach Anspruch 9, **dadurch gekennzeichnet, dass** die Vorrichtung mindestens einen fünften konzentrischen Induktor (5) aufweist, der ausgehend von dem mittleren Induktor (1) der vierte Umfangsinduktor ist, zum dritten Umfangsinduktor (4) parallel geschaltet ist und kurzgeschlossen werden kann.

12. Erwärmungsvorrichtung nach einem der Ansprüche 6 bis 11, **dadurch gekennzeichnet, dass** die Anzahl der konzentrischen Induktoren ungerade ist.

13. Erwärmungsvorrichtung nach Anspruch 12, **dadurch gekennzeichnet, dass** die Anzahl der konzentrischen Induktoren drei beträgt.

14. Erwärmungsvorrichtung nach einem der Ansprüche 6 bis 13, **dadurch gekennzeichnet, dass** der Außendurchmesser des äußersten Umfangsinduktors (3, 4, 5) im Wesentlichen dem einer großen Bratpfanne entspricht.
